# EUROPEAN PATENT APPLICATION

(11) **EP 4 809 815 A1**
(43) Date of publication of application: **23.09.2026**
(21) Application number: 25224879.4
(22) Date of filing: 18.12.2025
(51) Int. Cl.: A01G 9/08, A01G 17/16, A01G 9/14

(54) **AUTOMATIC SUPPORT STICK INSERTION SYSTEM**

(30) Priority: 21.03.2025 TW 114110682
(71) Applicant: CENZ Automation Co. Ltd., New Taipei City 235 (TW)
(72) Inventor: TRAN, Chi-Cuong, 116059 Taipei City (TW); LIN, Chyi-Yeu, 111 Taipei City (TW); YANG, Chun-Hsiang, 242039 New Taipei City (TW); HO, Chien-Chiao, 820116 Kaohsiung City (TW); LIN, Chang-Hao, 116059 Taipei City (TW)
(74) Representative: Wagner & Geyer

(57) **Abstract**

An automatic support stick insertion system (100) includes an image capture module (110), a processing unit (120), a turntable (130), a support stick supply module (140), a robot arm (150), and a control unit (160). The image capture module (110) captures an image of a potted plant (50A~50G). The processing unit (120) obtains potted plant information according to the image and determines support stick insertion information according to the potted plant information. The turntable (130) changes orientation of the potted plant (50A~50G). The support stick supply module (140) supplies support sticks (60). The robot arm (150) grabs the support stick (60) from the support stick supply module (140) and inserts the support stick (60) to the potted plant (50A~50G) according to the support stick insertion information. The control unit t (160) controls the support stick supply module (140), the robot arm (150), and the turntable (130) to act in coordination.

## Description

### BACKGROUND

### Technical Field

The disclosure relates to a potted plant processing system, and in particular to an automatic support stick insertion system for potted plants.

### Related Art

Ornamental orchids are very popular indoor plants due to their beauty and varieties. The orchids not only beautify spaces but also bring an elegant atmosphere. In order to make the orchids grow in a better extension direction, support sticks may be inserted into the orchid potted plants, and clips or other similar components may be used to fix the flower stems of the orchids together with the support sticks. By inserting a vertical support stick at a position adjacent to the base of each flower stem on the orchid potted plant, and subsequently fixing the flower stem to the support stick using different forms of clips, the flower stem may have more support, maintain a more ideal growth direction, and also reduce damage caused by collisions or pulling between outwardly drooping flower stems and flower stems of other potted plants or environmental objects during packaging and transportation of the potted plants. For the aesthetic appearance of potted plants, a support stick with a total length slightly lower than the vertical length of the flower stem is usually used in each flower stem. The operation of inserting the support stick into the orchid potted plant is usually performed manually by the operator. The operator must select a support stick with an appropriate length according to the positions of leaves and the positions and conditions of flower stems on each potted plant, and judge by themselves the appropriate positions on the potted plants for inserting the support stick. Since the lengths of flower stems on the orchid potted plant vary, the operator often discovers errors only after taking a support stick with mismatched length (too long or too short) and inserting the support stick next to the flower stem due to inaccurate visual estimation. At this time, the support stick with mismatched length must be pulled out. A support stick with matched length must be taken and re-inserted, which wastes a lot of time. Each orchid potted plant usually has different numbers of flower stems, and the flower stems may grow on different sides of large leaves that grow from the center toward both ends. Selecting an ideal support stick insertion position on the potted plant for each flower stem without conflicting with other support sticks is important for the effect of fixing the flower stem. The operator often select less ideal stick insertion positions due to negligence, which reduces the effect of fixing flower stems. For factories that mass-produce the orchid potted plants, this operation mode relies on a large number of operators and is labor-intensive and time-consuming.

### SUMMARY

The disclosure provides an automatic support stick insertion system to efficiently perform support stick insertion operation on a potted plant in an automated manner.

An automatic support stick insertion system of the disclosure is configured to perform support stick insertion operation on a potted plant. The potted plant includes at least one leaf and at least one flower stem. The automatic support stick insertion system includes an image capture module, a processing unit, a turntable, a support stick supply module, a robot arm, and a control unit. The image capture module is configured to capture at least one image of the potted plant. The processing unit is coupled to the image capture module, is configured to obtain potted plant information according to the at least one image, and is configured to determine support stick insertion information according to the potted plant information, where the potted plant information includes a position of the at least one leaf and a position, a quantity, and a length of the at least one flower stem, and the support stick insertion information includes a quantity of support sticks, a length of the support stick, a support stick insertion trajectory, and a support stick insertion position. The turntable is configured to carry the potted plant. The turntable is configured to rotate according to the potted plant information to change an orientation of the potted plant. The support stick supply module is configured to supply at least one support stick. The robot arm is coupled to the processing unit. The robot arm is configured to grab at least one support stick from the support stick supply module according to the support stick insertion information and insert the at least one support stick into the potted plant. The control unit is coupled to the support stick supply module, the robot arm, and the turntable and is configured to control the support stick supply module, the robot arm, and the turntable to act in coordination.

In an embodiment of the disclosure, the at least one image includes a first image and a second image. The potted plant information includes first information and second information. The image capture module is configured to capture the first image above the potted plant and is configured to capture the second image in front of the potted plant. The processing unit is configured to obtain the first information according to the first image and is configured to obtain the second information according to the second image. The first information includes the position of the at least one leaf and the position and the quantity of the at least one flower stem. The second information includes the position and the length of the flower stem.

In an embodiment of the disclosure, the image capture module includes a first image capture device and a second image capture device. The first image capture device is configured to capture the first image above the potted plant. The second image capture device is configured to capture the second image in front of the potted plant.

In an embodiment of the disclosure, the turntable is configured to rotate according to the first information to make a predetermined imaging side of the potted plant face toward the image capture module.

In an embodiment of the disclosure, the turntable is configured to rotate according to the first information to make a predetermined support stick insertion side of the potted plant face toward or away from the robot arm.

In an embodiment of the disclosure, the turntable is configured to rotate according to the first information to make a predetermined support stick insertion side of the potted plant to a specific direction relative to the robot arm to avoid collision with support stick on the potted plant.

In an embodiment of the disclosure, the processing unit is configured to determine support stick insertion information according to the first information and the second information.

In an embodiment of the disclosure, the support stick supply module may supply one support stick at one time to a preset position for the robot arm to grab at a fixed position.

In an embodiment of the disclosure, the support stick supply module includes multiple support stick supply devices. The support stick supply devices are respectively configured to supply support sticks with different lengths.

In an embodiment of the disclosure, the image capture module is further configured to capture an image of a head of at least one support stick grabbed by the robot arm. The control unit is configured to determine the degree of inclination of the support stick according to the image of the head of the at least one support stick and correct an action of the robot arm accordingly.

In an embodiment of the disclosure, the image capture module includes a two-dimensional camera, a three-dimensional camera, or scanning devices such as Structure Light, LiDAR, and Time-of-Flight.

In an embodiment of the disclosure, the automatic support stick insertion system further includes an operation area, an automatic feeding module, and an automatic discharge module. The image capture module is configured to capture at least one image of the potted plant in the operation area. The robot arm is configured to insert at least one support stick into the potted plant in the operation area. The automatic feeding module is configured to move the potted plant to the operation area. The automatic discharge module is configured to move the potted plant away from the operation area.

Based on the above, in the automatic support stick insertion system of the disclosure, the processing unit determines the quantity and length of support sticks suitable for the potted plant according to the potted plant image captured by the image capture module, and determines the support stick insertion trajectory and support stick insertion position when the robot arm performs the support stick insertion operation. Moreover, the potted plant may be driven by the turntable so that its predetermined imaging side faces toward the image capture module, thereby enabling the image capture module to smoothly capture the potted plant image, and making its predetermined support stick insertion side face toward or away from the robot arm, allowing the robot arm to smoothly insert the support stick into the appropriate position on the potted plant. Accordingly, the automatic support stick insertion system of the disclosure may replace the traditional manual method to efficiently perform support stick insertion operation on potted plants in an automated manner.

### BRIEF DESCRIPTION OF THE DRAWINGS

FIG. 1 is a perspective schematic view of partial components of an automatic support stick insertion system according to an embodiment of the disclosure.
FIG. 2 is a block schematic view of partial components of the automatic support stick insertion system in FIG. 1.
FIG. 3 is a schematic side view of a potted plant in FIG. 1.
FIG. 4 is a top view of the potted plant in FIG. 3.
FIG. 5 illustrates an orientation change of the potted plant in FIG. 4.
FIG. 6 illustrates the potted plant in FIG. 3 having completed a support stick insertion operation.
FIG. 7 is a top view of a potted plant according to another embodiment of the disclosure.
FIG. 8A to FIG. 8F illustrate an operation flow of the automatic support stick insertion system in FIG. 1.
FIG. 9 illustrates the automatic support stick insertion system in FIG. 1 integrated into a potted plant conveyor system.
FIG. 10 and FIG. 11 illustrate the automatic support stick insertion system and potted plant conveyor system in FIG. 9 matched with each other in different quantities.

### DESCRIPTION OF THE EMBODIMENTS

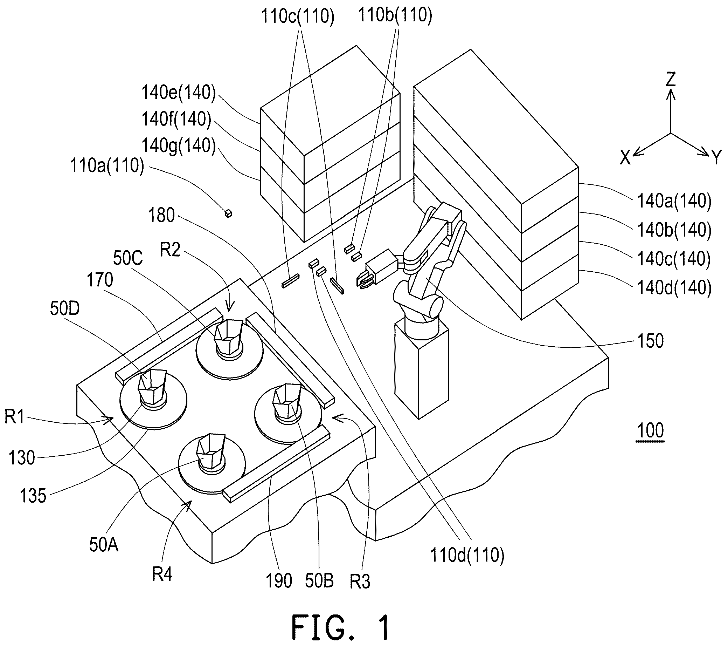

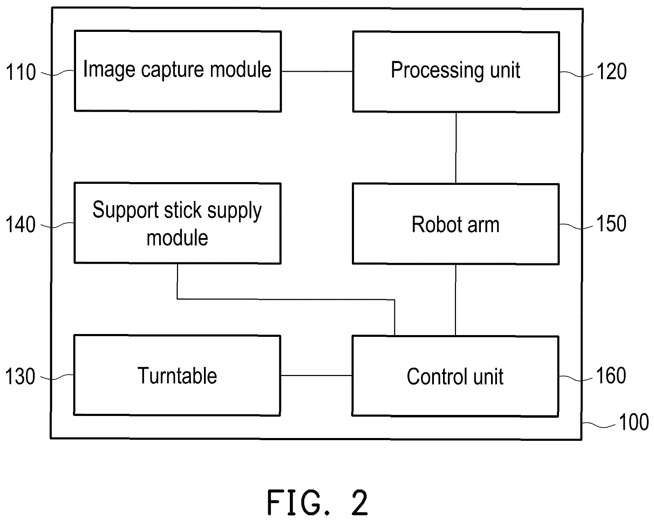

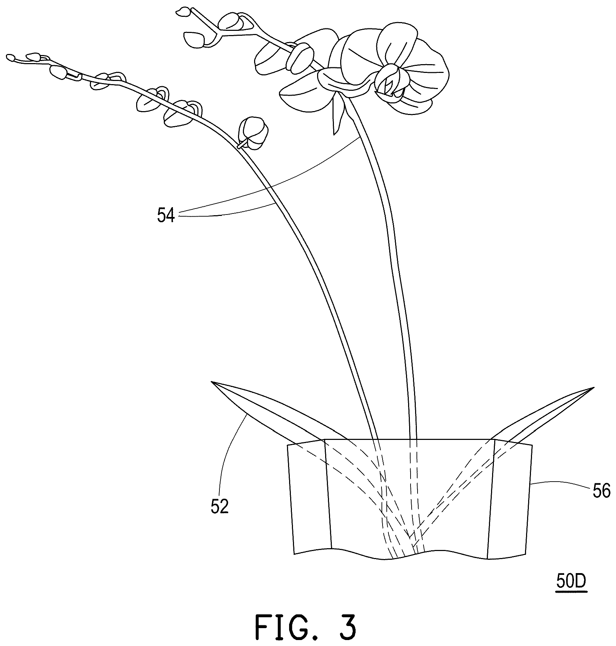

FIG. 1 is a perspective schematic view of partial components of an automatic support stick insertion system according to an embodiment of the disclosure, which illustrates axial directions X, Y, Z. FIG. 2 is a block schematic view of partial components of the automatic support stick insertion system in FIG. 1. FIG. 3 is a schematic side view of a potted plant in FIG. 1. Referring to FIG. 1 to FIG. 3, an automatic support stick insertion system 100 of this embodiment is configured to perform support stick insertion operation on potted plants (multiple potted plants 50A to 50D are illustrated in FIG. 1). The potted plants in FIG. 1 are only briefly illustrated. Taking the potted plant 50D shown in FIG. 3 as an example, each potted plant is for example an orchid potted plant and includes leaves 52, flower stems 54, and a flower pot 56 carrying the leaves 52 and the flower stems 54. The flower pot 56 of the disclosure may be a flower pot for orchid cultivation, or may serve as a flower pot protective container for placing orchid flower pots on a production line, which may be regarded as a flower pot in a broad sense. These two interpretations do not affect the innovative technology of the disclosure. The automatic support stick insertion system 100 includes an image capture module 110, a processing unit 120, multiple turntables 130, a support stick supply module 140, a robot arm 150, and a control unit 160. The image capture module 110 is configured to capture an image of the potted plant.

The processing unit 120 is coupled to the image capture module 110 and is configured to obtain potted plant information according to the image, and determine support stick insertion information according to the potted plant information. The potted plant information includes the position of the leaf 52 and the position, quantity, and length of the flower stem 54, and the support stick insertion information includes the length of a support stick, a support stick insertion trajectory, and a support stick insertion position. The turntables 130 are respectively configured to carry the potted plants 50A to 50D, and each turntable 130 may rotate according to the potted plant information to change the orientation of the potted plant. The support stick supply module 140 is configured to supply support sticks. The robot arm 150 is coupled to the processing unit 120, and is configured to grab the support stick from the support stick supply module 140 according to the support stick insertion information and insert the support stick into the potted plant. The control unit 160 is coupled to the support stick supply module 140, the robot arm 150, and the turntables 130 and is configured to control the support stick supply module 140, the robot arm 150, and the turntable 130 to act in collaboration.

In this embodiment, the processing unit 120 and the control unit 160 may include devices such as a desktop computer, a laptop, a smartphone, a tablet, a workstation, a host, or a processor (for example, a central processing unit (CPU), a microcontroller, a programmable controller, an application-specific integrated circuit (ASIC), a chip, other similar elements, or combinations of the aforementioned elements), but the disclosure is not limited thereto.

As described above, in the automatic support stick insertion system 100 of this embodiment, the processing unit 120 determines the quantity of support sticks and the length of the support stick suitable for the potted plant according to the image of the potted plant captured by the image capture module 110, and determines the support stick insertion trajectory and support stick insertion position when the robot arm 150 performs the support stick insertion operation. Moreover, the potted plant may be driven by the turntable 130, so that a predetermined imaging side faces toward the image capture module 110, thereby enabling the image capture module 110 to smoothly capture the image of the potted plant. Moreover, a predetermined support stick insertion side faces toward or away from the robot arm 150, and the robot arm 150 may smoothly insert the support stick into an appropriate position on the potted plant. Accordingly, the automatic support stick insertion system 100 of this embodiment may replace the conventional manual method to efficiently and correctly perform the support stick insertion operation on the potted plant in an automated manner.

Specifically, the image captured by the image capture module 110 for the potted plant include a first image and a second image. The first image is a top view image of the potted plant. The second image is a front view image of the potted plant. Correspondingly, the potted plant information obtained by the processing unit 120 according to the images includes first information corresponding to the first image and second information corresponding to the second image. The first information includes the positions and the quantity of the leaves 52 and the positions and quantities of the flower stems 54 in the top view. The second information includes the positions and lengths of the flower stems 54 in the front view. In this embodiment, the image capture module 110 as shown in FIG. 1 includes a first image capture device 110a and at least one second image capture device 110b (illustrated as two). The first image capture device 110a is, for example, a two-dimensional camera or a three-dimensional camera and is configured to capture the first image above the potted plant. The second image capture device 110b is, for example, a two-dimensional camera or a three-dimensional camera and is configured to capture the second image in front of the potted plant. The processing unit 120 is configured to obtain the first information according to the first image and is configured to obtain the second information according to the second image.

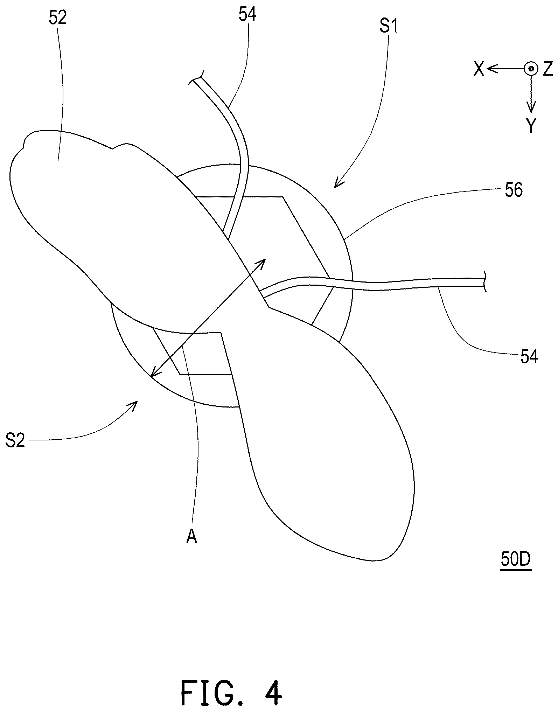

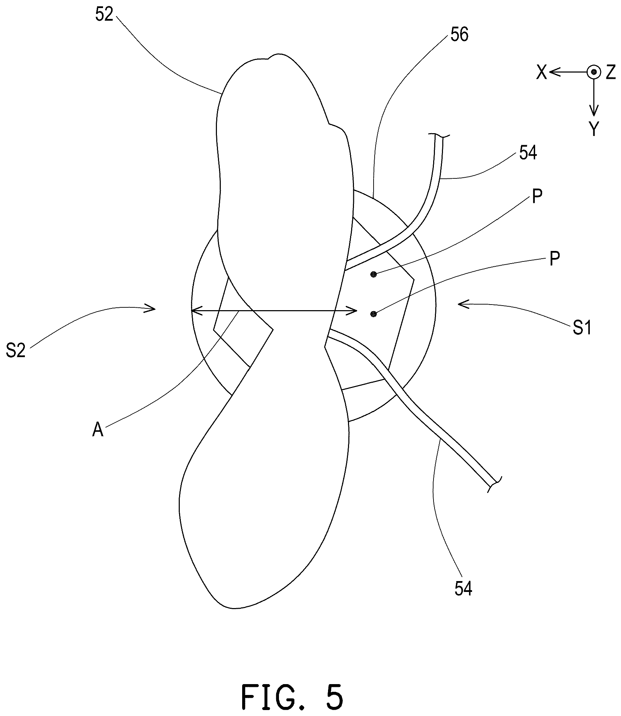

FIG. 4 is a top view of the potted plant in FIG. 3. FIG. 5 illustrates an orientation change of the potted plant in FIG. 4. Taking the potted plant 50D shown in FIG. 4 and FIG. 5 as an example, the potted plant 50D has a first side S1 and a second side S2 opposite to each other in a short axis direction A of the leaf 52, and two flower stems 54 are both located on the first side S1, for example. The turntable 130 may rotate as shown in FIG. 4 to FIG. 5 according to at least part of the information (for example, the position of the leaf 52 and the position of the flower stem 54 in the top view) of the first information to make a predetermined imaging side (the first side S1) of the potted plant 50D face toward the second image capture device 110b of the image capture module 110, so that the second image capture device 110b may smoothly capture the image of the potted plant 50D that clearly show the position and the length of the flower stem 54. In addition, the turntable 130 may rotate as shown in FIG. 4 to FIG. 5 according to at least part of the information (for example, the position of the leaf 52 and the position of the flower stem 54 in the top view) of the first information to make the predetermined support stick insertion side (the first side S1) of the potted plant 50D face toward or away from the robot arm 150, so that the robot arm 150 may perform the support stick insertion operation on the potted plant 50D. The predetermined imaging side (the first side S1) facing toward or away from the robot arm 150 each has advantages and disadvantages. When the predetermined imaging side faces toward the robot arm 150, the robot arm 150 holding the support stick to perform the stick insertion operation is closer to the flower pot. When the predetermined imaging side faces away from the robot arm 150, the probability of the robot arm 150 accidentally touching the flower stem 54 during the stick insertion operation is low. According to at least part of the information of the first information, when it is predicted that when the support stick is inserted, the support stick that has been inserted on the flower pot facing toward or away from the robot arm 150 as pre-planned may interfere with the support stick insertion operation, and the turntable 130 may rotate the potted plant 50D to a specific angular position relative to the robot arm 150, so that the robot arm 150 may perform the support stick insertion operation on the potted plant 50D without colliding with the existing support stick on the flower pot.

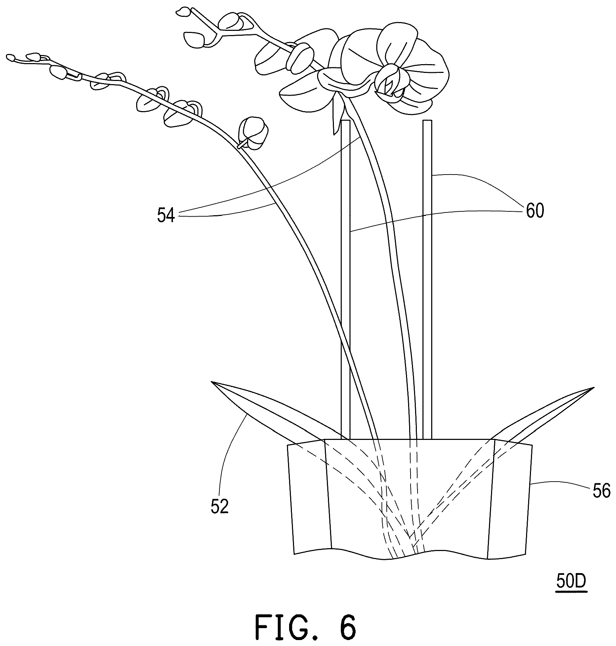

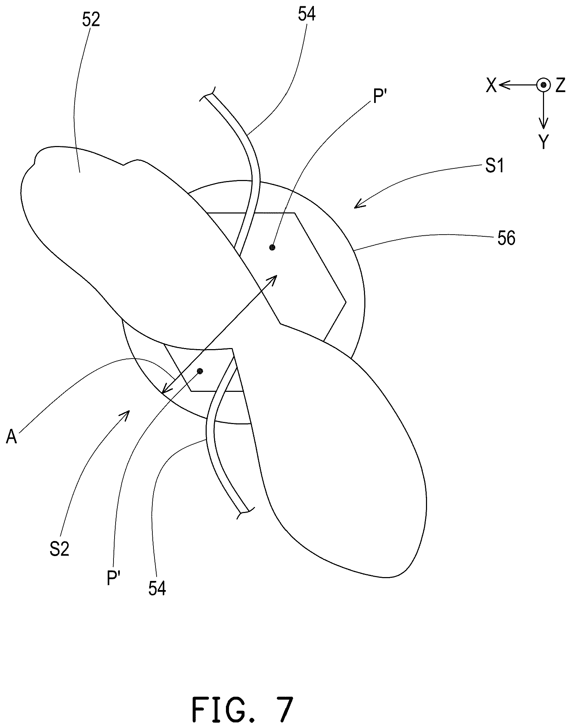

Following the above, the processing unit 120 may know the extension manner of the flower stem 54 in space according to at least part of the information (for example, the positions and the quantity of the flower stems 54 in top view) of the first information and the second information (the positions and the lengths of the flower stems 54 in front view), and accordingly determine the support stick insertion information (the quantity of support sticks, the length of the support stick, the support stick insertion trajectory, and the support stick insertion position) through calculation. Taking the potted plant 50D shown in FIG. 5 as an example, according to the positions and quantity of the flower stems 54 in top view and the positions and the lengths of the flower stem 54 in front view, the processing unit 120 may determine the quantity of support sticks, the length of the support stick, the support stick insertion trajectory, and the support stick insertion position suitable for the potted plant 50D. The support stick insertion positions are, for example, two positions P adjacent to the two flower stems 54 on the first side S1 as shown in FIG. 5. FIG. 6 illustrates the potted plant in FIG. 3 having completed a support stick insertion operation. After completing the support stick insertion operation, two support sticks 60 are respectively adjacent to the two flower stems 54 as shown in FIG. 6, for subsequently fixing the flower stems 54 and the support sticks 60 together by using clips or other similar components to facilitate growth. FIG. 7 is a top view of a potted plant according to another embodiment of the disclosure. In the case where the two flower stems 54 are respectively located on the first side S1 and the second side S2 as shown in FIG. 7, the support stick insertion positions are, for example, two positions P' respectively adjacent to the two flower stems 54 on the first side S1 and the second side S2 as shown in FIG. 7. Certainly, there are also exceptional cases where it may be chosen to insert the support stick to another side of the flower stem 54 on the leaf 52.

Referring to FIG. 1, the support stick supply module 140 of this embodiment includes multiple support stick supply devices 140a to 140g. The support stick supply devices 140a to 140g are respectively configured to automatically supply support sticks with different lengths. The support stick supply module 140 is designed to supply one support stick at a time to a preset outlet position for the robot arm 150 to grab at the fixed position for saving time. When the support stick at the preset outlet position of the support stick supply module 140 is grabbed by the robot arm 150, the design of the support stick supply module 140 continues to supply a new support stick to the preset outlet position.

According to the quantity of support sticks and the length of the support stick in the support stick insertion information, the control unit 160 controls the robot arm 150 to sequentially grab the required quantity and length of support sticks one at a time from the support stick supply devices 140a to 140g that meet the requirements and insert the same to the corresponding potted plant positions.

In this embodiment, the image capture module 110 as shown in FIG. 1 further includes at least one third image capture device 110c (illustrated as two). The third image capture device 110c is, for example, a two-dimensional camera or three-dimensional camera. After the robot arm 150 grabs the support stick and before the robot arm 150 performs the support stick insertion operation on the potted plants, the third image capture device 110c is configured to capture an image of a head of the support stick grabbed by the robot arm 150, and the control unit 160 may determine the degree of inclination of the support stick according to the image of the head of the support stick and correct the operation of the robot arm 150 accordingly, so that the robot arm 150 inserts the support stick to the correct position on the potted plants. In an implementation manner, two cameras perpendicular to each other are used, and each captures images of the head of the support stick, the scale of deviation from the center is determined, the offset quantities of the X and Y axes are calculated respectively, and then the actual spatial offset quantity or degree of inclination of the head of the support stick are calculated in combination. In addition, the image capture module 110 as shown in FIG. 1 further includes at least one fourth image capture device 110d (illustrated as two). The fourth image capture device 110d is, for example, a two-dimensional camera or three-dimensional camera. The fourth image capture device 110d is configured to capture the image of the potted plant and the support stick from above when the robot arm 150 performs the support stick insertion operation on the potted plant, and observes the insertion position where the support stick is about to reach, so that the robot arm 150 accurately performs the support stick insertion operation with the assistance of the fourth image capture device 110d by correcting the stick insertion position when necessary.

As shown in FIG. 1, the automatic support stick insertion system 100 of this embodiment includes an automatic feeding module 170, an operation area (illustrated as including a work position R2 and a work position R3), an automatic conveyor module 180, and an automatic discharge module 190. The turntable 130 is rotatably disposed on the conveyor tray 135. The automatic feeding module 170 is configured to move the conveyor tray 135 and the turntable 130 thereon together with the potted plant from the feed position R1 to the work position R2 in the operation area. The automatic conveyor module 180 is configured to move the conveyor tray 135 and the turntable 130 thereon together with the potted plant from the work position R2 to the work position R3. The automatic discharge module 190 is configured to move the conveyor tray 135 and the turntable 130 thereon together with the potted plant from the work position R3 in the operation area to the discharge position R4. The automatic feeding module 170, the automatic conveyor module 180, and the automatic discharge module 190 are only schematically illustrated in FIG. 1. Each of the automatic feeding module 170, the automatic conveyor module 180, and the automatic discharge module 190 may actually include a slide rail and a holding mechanism sliding on the slide rail. The holding mechanism is configured to hold the conveyor tray 135 and move along the slide rail by a cylinder or other types of power sources to drive the movement of the conveyor tray 135. In other embodiments, the conveyor tray 135 may be driven to move by other types of mechanisms, but the disclosure is not limited thereto.

In this embodiment, the image capture device 110a of the image capture module 110 performs the aforementioned image capture operation on the potted plant at the work position R2 in the operation area to obtain the first image, the image capture device 110b of the image capture module 110 performs the aforementioned image capture operation on the potted plant at the work position R2 in the operation area to obtain the second image, and the robot arm 150 inserts the support stick into the potted plant at the work position R3 in the operation area. That is, the image capture device 110a and the image capture device 110b capture the image of the potted plant at the same work position R2, while the robot arm 150 performs the support stick insertion operation on the potted plant at the work position R3. However, the disclosure is not limited thereto. In other embodiments, the image capture device 110b of the image capture module 110 may alternatively perform the aforementioned image capture operation on the potted plant at the work position R3 in the operation area to obtain the second image. That is, the image capture device 110b and the robot arm 150 respectively captures the image of the potted plant and performs the support stick insertion operation on the potted plant at the same work position R3, while the image capture device 110a captures the image of the potted plant at the work position R2. Alternatively, in other embodiments, the image capture device 110a, the image capture device 110b, and the robot arm 150 may respectively capture the image of the potted plant and perform the support stick insertion operation on the potted plant at the same work position. That is, the work positions R2 and R3 of the embodiment shown in FIG. 1 are integrated into a single work position.

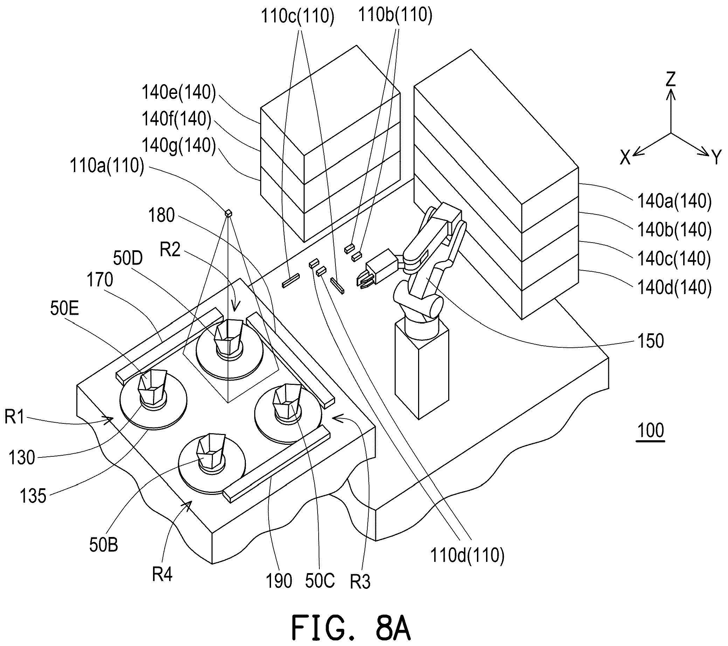

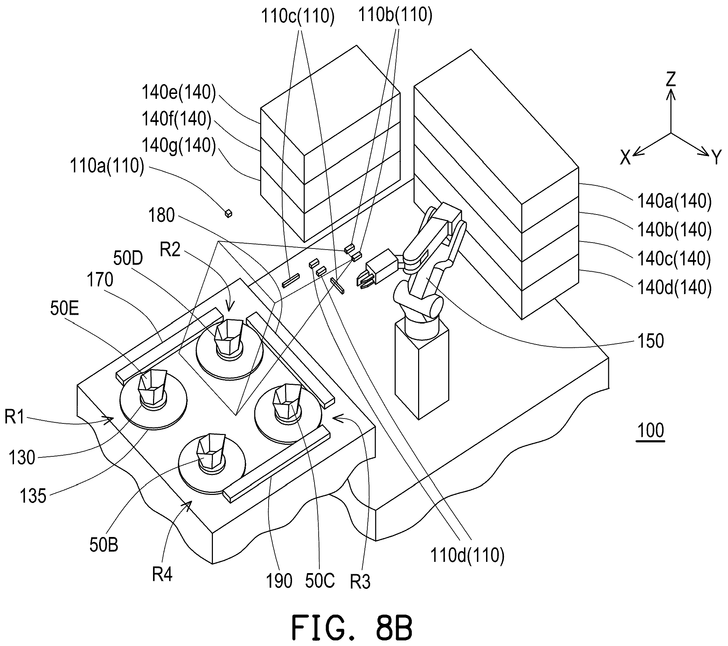

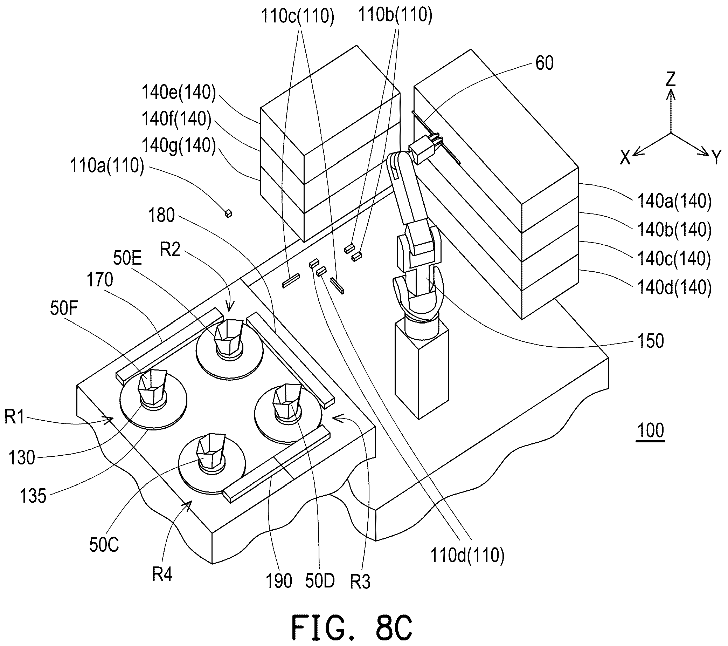

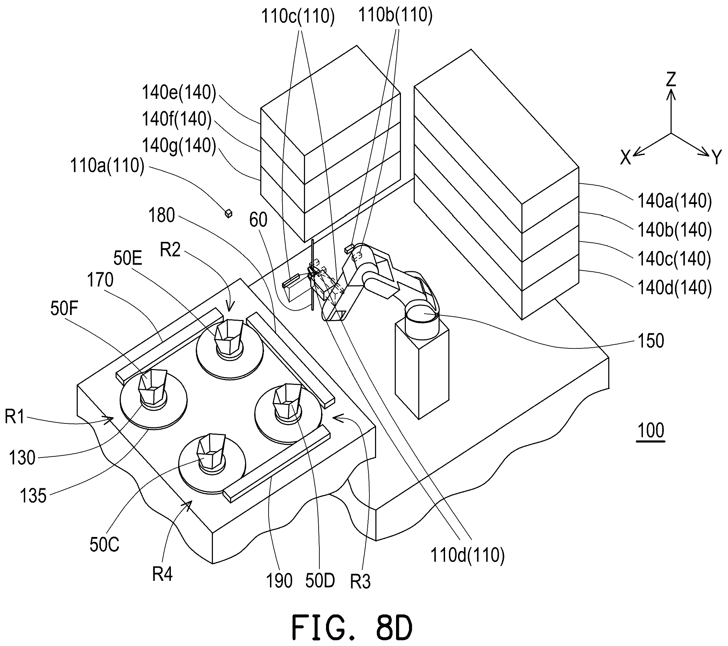

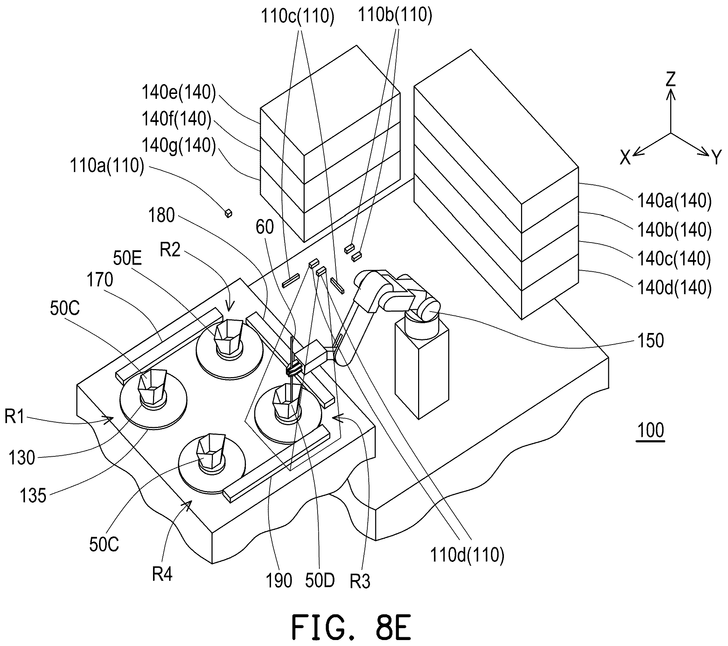

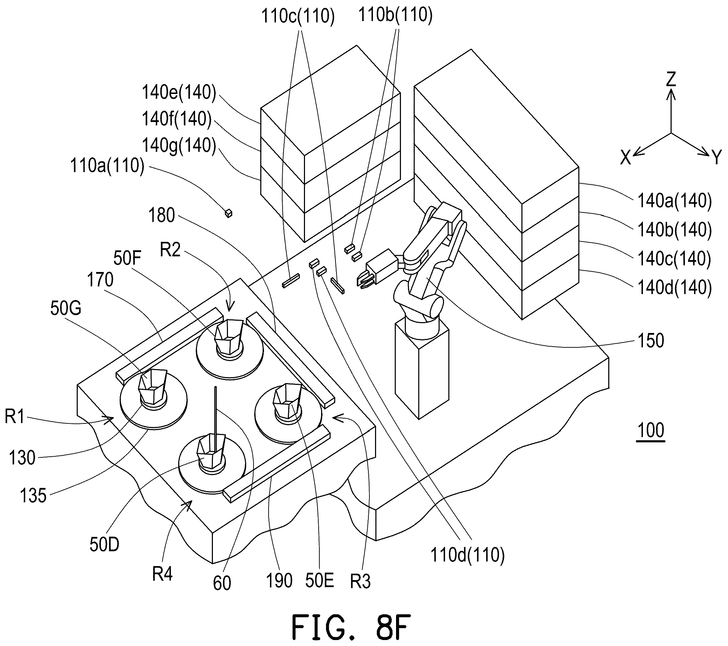

The following specifically describes the operation flow of the automatic support stick insertion system 100 in FIG. 1. FIG. 8A to FIG. 8F illustrate an operation flow of the automatic support stick insertion system in FIG. 1. The potted plants 50A to 50G sequentially perform the support stick insertion operation in the same manner. The support stick insertion operation performed on the potted plant 50D is used as an example for following description. First, the automatic feeding module 170 moves the potted plant 50D at the feed position R1 shown in FIG. 1 to the work position R2 shown in FIG. 8A. The image capture device 110a captures the image of the potted plant 50D at the work position R2 as shown in FIG. 8A to obtain the first image. The turntable 130 corresponding to the potted plant 50D rotates the potted plant 50D according to the first information, so that the image capture device 110b is suitable for capturing the image of the potted plant 50D as shown in FIG. 8B to obtain the second image. The automatic conveyor module 180 moves the potted plant 50D at the work position R2 shown in FIG. 8B to the work position R3 shown in FIG. 8C. The robot arm 150 grabs the support stick 60 as shown in FIG. 8C according to the support stick insertion information, and the robot arm 150 moves the grabbed support stick 60 to the image capture device 110c as shown in FIG. 8D to correct the degree of inclination of the support stick 60. The robot arm 150 inserts the support stick 60 into the potted plant 50D as shown in FIG. 8E with the assistance of the image capture device 110d according to the support stick insertion trajectory in the support stick insertion information. The automatic discharge module 190 moves the potted plant 50D that has completed the support stick insertion operation at the work position R3 shown in FIG. 8E to the discharge position R4 shown in FIG. 8F.

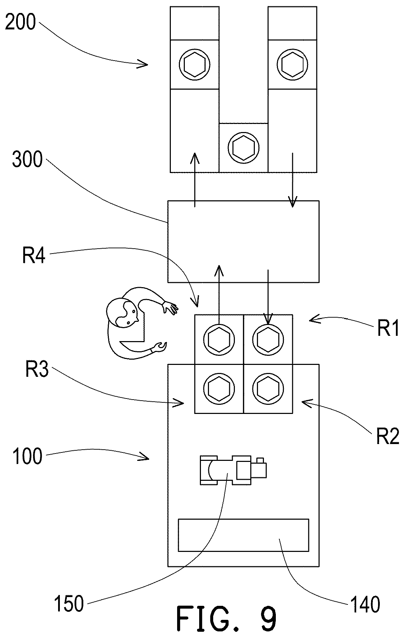

FIG. 9 illustrates the automatic support stick insertion system in FIG. 1 integrated into a potted plant conveyor system. Referring to FIG. 9, the automatic support stick insertion system 100 of this embodiment may be integrated with a potted plant conveyor system 200 configured to transport potted plants in a potted plant factory. Since different potted plant factories have different specifications of potted plant conveyor systems 200, the automatic support stick insertion system 100 and the potted plant conveyor system 200 of this embodiment may be connected by a dedicated transfer conveyor module 300, so that potted plants may be smoothly transferred between the automatic support stick insertion system 100 and the potted plant conveyor system 200 through automatic transfer transport of the transfer conveyor module 300, to achieve a fully automated operation mode. The operator shown in the figure is configured to manually fix the flower stem to the support stick by using a clip after the automatic support stick insertion system has inserted the support stick into the flower pot.

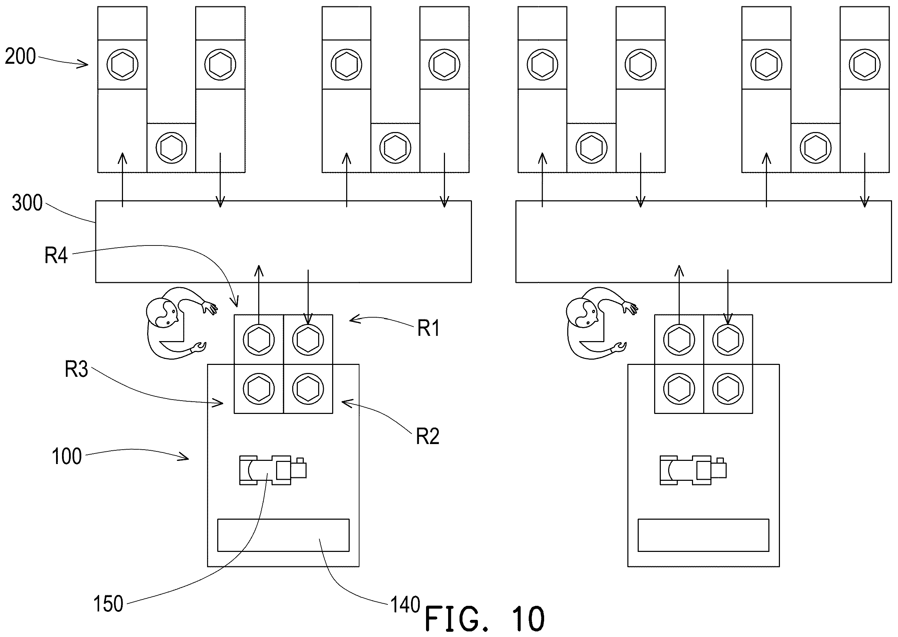

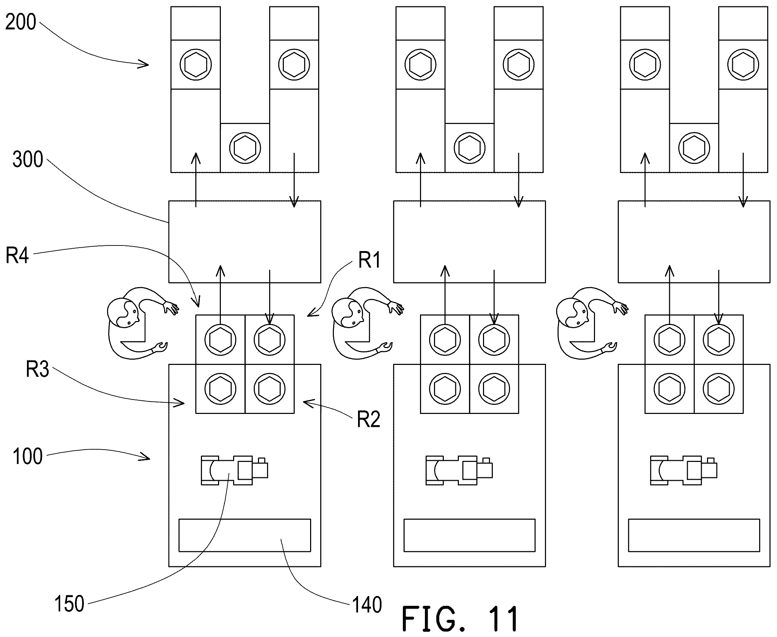

FIG. 10 and FIG. 11 illustrate the automatic support stick insertion system and potted plant conveyor system in FIG. 9 matched with each other in different quantities. The disclosure does not limit the quantity of automatic support stick insertion systems 100 and the quantity of potted plant conveyor systems 200 matched with each other. For example, as shown in FIG. 10, two automatic support stick insertion systems 100 may be matched with four potted plant conveyor systems 200, where two potted plant conveyor systems 200 are integrated with one automatic support stick insertion system 100 through one transfer conveyor module 300, and another two potted plant conveyor systems 200 are integrated with another automatic support stick insertion system 100 through another transfer conveyor module 300. Alternatively, as shown in FIG. 11, three automatic support stick insertion systems 100 may be matched with three potted plant conveyor systems 200, where each potted plant conveyor system 200 is integrated with one automatic support stick insertion system 100 through one transfer conveyor module 300.

To sum up, in the automatic support stick insertion system of the disclosure, the processing unit determines the quantity of support sticks and the length of the support stick suitable for the potted plant according to the image of the potted plant captured by the image capture module, and determines the support stick insertion trajectory and the support stick insertion position when the robot arm performs the support stick insertion operation. Moreover, the potted plant may be driven by the turntable, so that the predetermined imaging side faces toward the image capture module, thereby enabling the image capture module to smoothly capture the image of the potted plant, and making the predetermined support stick insertion side face toward or away from the robot arm, so that the robot arm may smoothly insert the support stick to appropriate position on the potted plant. Accordingly, the automatic support stick insertion system of the disclosure may replace the traditional manual method to efficiently perform the support stick insertion operation on potted plant in the automated manner.

## Claims

1. An automatic support stick insertion system (100) configured to perform a support stick insertion operation on a potted plant (50A~50G), the potted plant (50A~50G) comprising at least one leaf (52) and at least one flower stem (54), and the automatic support stick insertion system (100) comprising:
an image capture module (110), configured to capture at least one image of the potted plant (50A~50G);
a processing unit (120), coupled to the image capture module (110), configured to obtain potted plant information according to the at least one image, and configured to determine support stick insertion information according to the potted plant information, wherein the potted plant information comprises a position of the at least one leaf (52) and a position, a quantity, and a length of the at least one flower stem (54), and the support stick insertion information comprises a quantity of support sticks (60), a length of a support stick (60), a support stick insertion trajectory, and a support stick insertion position;
a turntable (130), configured to carry the potted plant (50A~50G), wherein the turntable (130) is configured to rotate according to the potted plant information to change an orientation of the potted plant (50A~50G);
a support stick supply module (140), configured to supply at least one support stick (60);
a robot arm (150), coupled to the processing unit (120), wherein the robot arm (150) is configured to grab the at least one support stick (60) from the support stick supply module (140) according to the support stick insertion information and insert the at least one support stick (60) into the potted plant (50A~50G); and
a control unit (160), coupled to the support stick supply module (140), the robot arm (150), and the turntable (130), and configured to control the support stick supply module (140), the robot arm (150), and the turntable (130) to act in coordination.

2. The automatic support stick insertion system (100) according to claim 1, wherein the at least one image comprises a first image and a second image, the potted plant information comprises first information and second information, the image capture module (110) is configured to capture the first image above the potted plant (50A~50G) and configured to capture the second image in front of the potted plant (50A~50G), the processing unit (120) is configured to obtain the first information according to the first image and configured to obtain the second information according to the second image, the first information comprises the position of the at least one leaf (52) and the position and the quantity of the at least one flower stem (54), and the second information comprising the position and the length of the flower stem (54).

3. The automatic support stick insertion system (100) according to claim 2, wherein the image capture module (110) comprises a first image capture device (110a) and a second image capture device (110b), the first image capture device (110a) is configured to capture the first image above the potted plant (50A~50G), and the second image capture device (110b) is configured to capture the second image in front of the potted plant (50A~50G).

4. The automatic support stick insertion system (100) according to claim 2, wherein the turntable (130) is configured to rotate according to the first information to make a predetermined imaging side of the potted plant (50A~50G) face toward the image capture module (110).

5. The automatic support stick insertion system (100) according to claim 2, wherein the turntable (130) is configured to rotate according to the first information to make a predetermined support stick insertion side of the potted plant (50A~50G) face toward or away from the robot arm (150).

6. The automatic support stick insertion system (100) according to claim 2, wherein the turntable (130) is configured to rotate according to the first information to make a predetermined support stick insertion side of the potted plant (50A~50G) to a specific direction relative to the robot arm (150) to avoid collision with the support stick (60) on the potted plant (50A~50G).

7. The automatic support stick insertion system (100) according to claim 2, wherein the processing unit (120) is configured to determine the support stick insertion information according to the first information and the second information.

8. The automatic support stick insertion system (100) according to claim 1, wherein the support stick supply module (140) is configured to supply one support stick (60) at one time at a preset position for the robot arm (150) to grab at a fixed position.

9. The automatic support stick insertion system (100) according to claim 1, wherein the support stick supply module (140) comprises a plurality of support stick supply devices (140a~140g), the support stick supply devices (140a~140g) are respectively configured to supply support sticks (60) with different lengths.

10. The automatic support stick insertion system (100) according to claim 1, wherein the image capture module (110) is further configured to capture an image of a head of the at least one support stick (60) grabbed by the robot arm (150), the control unit (160) is configured to determine a degree of inclination of the support stick (60) according to the image of the head of the at least one support stick (60) and correct an action of the robot arm (150) accordingly.

11. The automatic support stick insertion system (100) according to claim 1, wherein the image capture module (110) comprises a two-dimensional camera, a three-dimensional camera, or scanning devices such as Structure Light, LiDAR, and Time-of-Flight.

12. The automatic support stick insertion system (100) according to claim 1, further comprising an operation area, an automatic feeding module (170), and an automatic discharge module (190), wherein the image capture module (110) is configured to capture the at least one image of the potted plant (50A~50G) in the operation area, the robot arm (150) is configured to insert the at least one support stick (60) into the potted plant (50A~50G) in the operation area, the automatic feeding module (170) is configured to move the potted plant (50A~50G) to the operation area, and the automatic discharge module (190) is configured to move the potted plant (50A~50G) away from the operation area.
